# EUROPÄISCHE PATENTSCHRIFT

(11) **EP 1 306 134 B1**
(45) Veröffentlichungstag und Bekanntmachung des Hinweises auf die Patenterteilung: **06.05.2009**
(21) Anmeldenummer: 02022979.5
(22) Anmeldetag: 14.10.2002
(51) Int. Cl.: B02C 23/24

(54) **Verfahren und Vorrichtung zur Mahltrocknung**
Method and device for mill drying
Procédé et dispositif de séchage-broyage

(30) Priorität: 26.10.2001 DE 10152991
(43) Veröffentlichungstag der Anmeldung: 02.05.2003
(73) Patentinhaber: Dow Global Technologies Inc., Midland, MI 48674 (US)
(72) Erfinder: Schlesiger, Hartwig, Dr., 29683 Fallingbostel (DE); Morning, Martin, Dr., 04838 Zschepplin (DE); Sonnenberg, Gerd, Dr., 29664 Walsrode (DE); Heidemann, Rudolf, Dr., 29664 Walsrode (DE)
(74) Vertreter: Polypatent

(56) Entgegenhaltungen:
- EP-A- 0 227 008
- DE-A- 19 853 925

## Beschreibung

Die hier beschriebene Erfindung betrifft ein Verfahren und eine Vorrichtung zur Mahltrocknung in einer Kreisgasmahltrocknungsanlage nach dem Oberbegriff des Anspruchs 1 bzw. des Anspruchs 6.

Die EP-A-0 835 882 beschreibt ein Verfahren und eine Vorrichtung zum gleichzeitigen Mahlen und Trocknen eines feuchten Celluloseethers. Bei dem Verfahren und der Vorrichtung wird ein Gasstrom in drei Teilgasströme aufgeteilt. Obschon der Gasstrom gegebenenfalls zurückgeführt wird, wird in der EP-A- 0 835 882 keine Anweisung gegeben, wie im Falle der Kreisgasfahrweise Überhitzungen entgegen gewirkt werden kann. Des Weiteren wird bei Kreisgasfahrweise ein Kondensator im Kreislauf eingesetzt, so dass als Trägergas kein Wasserdampf eingesetzt werden kann.

Die EP-A- 0227008 beschreibt ein Verfahren und eine Einrichtung zum Betrieb einer Mahlanlage. Die Anmeldung bezieht sich auf ein Verfahren zum Betrieb einer Mahlanlage, die vom Produkt und einem Trägergas durchströmt wird, bei welchem als Trägergas ein im Kreislauf geführtes Inertgas verwendet wird. Bei diesem Verfahren wird nur die Mahlung eines Mahlgutes beschrieben. Eine Mahltrocknung durch ein überhitztes Trägergas ist nicht vorgesehen.

Die WO 98/31710 beschreibt eine Mahltrocknunganlage zur Herstellung von Polysaccharidderivat-Pulvern, wobei als Mahlgut gelöste oder gequollene Polysaccharidderivate eingesetzt werden. Das gelöste oder gequollene Polysaccharidderivat wird durch vielfache Prall- und/oder Scherbeanspruchung zwischen rotierenden und feststehenden oder gegenläufig rotierenden Mahlwerkzeugen und/oder durch Stoß mehrerer Partikel zerkleinert. Gleichzeitig wird das im Feststoff befindliche Wasser verdampft. Die dazu erforderliche thermische Energie wird nur zum Teil durch überhitzten Wasserdampf eingebracht. Die durch Reibung in Wärme umgesetzte elektrische Energie des Mühlenantriebes trägt gleichzeitig zur Trocknung bei. Die feinteiligen Feststoffpartikel werden in einem der Mahltrocknungsvorrichtung nachgeschaltetem Abscheider vom Gasstrom getrennt. Dieses kann ein Massenkraftabscheider wie z.B. ein Zyklon oder auch ein Filterabscheider sein. Je nach Mühlenbauart kann bereits intern eine Klassierung durch Sichtung erfolgen. Ein gegebenenfalls vorhandener Grießeanteil wird aufgrund der die Schleppkräfte des Transportgases überwiegenden Fliehkraft vom Feingut getrennt. Das Feingut wird als Fertiggut aus der Mahlkammer mit dem Transportgas ausgetragen. Die Grieße werden in einem internen oder externen Grießerücklauf wieder zur Mahlzone zurückgeführt. Alternativ oder ergänzend kann es sinnvoll sein, eine weitere Klassierstufe durch Sichtung oder bevorzugt Siebung nachzuschalten. Der dort abgetrennte Grobanteil kann gegebenenfalls zur Mühle zurückgeführt oder dem Aufgabegut untergemischt werden.

Die Temperatur des für die Heißdampfmahltrocknung notwendigen Wasserdampfes wird so gewählt, dass in Abhängigkeit des gewählten Produktdurchsatzes und/oder der Menge an Wasser im Polysaccharidderivat an keiner Stelle der Taupunkt unterschritten wird.

Durch Verwendung von Wasser in der Heißdampfmahltrocknung wird eine sauerstoffarme Atmosphäre innerhalb der Mahltrocknungsvorrichtung erreicht.

In einer Variante des Verfahrens wird der Heißdampf im Kreis geführt und der überschüssige Heißdampf als Dampfteilstrom ausgeschleust. Vor die Mahltrocknungsvorrichtung wird ein Wärmetauscher geschaltet, der den Kreisgasstrom auf die zur Mahltrocknung erforderliche Temperatur erhitzt.

In der Praxis erweist sich eine Kreisgasfahrweise als problematisch, da im Falle des Ausfalls oder eines plötzlichen Absinken des Mahlgutstromes kein Verbraucher mehr für die thermische Energie zur Verfügung steht. Selbst wenn spontan die Heizleistung des Wärmetauschers minimiert wird, wie z.B. durch Löschen der Brennerflamme, so reicht die im Wärmetauscher gespeicherte Energie aus, um den gesamten Mahltrocknungskreislauf deutlich aufzuheizen. Diese Aufheizung führt so weit, dass Produktanhaftungen in der Mühle oder Restprodukte im Zyklon oder Filterabscheider sich zersetzen und die Produktqualität des anschließend hergestellten Produkts mindern. Auch kann es bei starker Erhitzung der Filtermaterialien zu Bränden oder mindestens zu einem Schmelzen der Filter mit erheblichen Sachschaden kommen.

Um solche Nachteile zu vermeiden, wird gemäß dem Stand der Technik ein Kühlmedium eingesetzt, welches als Verbraucher an Stelle des Mahlgutes fungiert. Ein solcher Verbraucher kann z.B. Luft oder Stickstoff sein. Eine andere Möglichkeit besteht z.B. in der Eindüsung von Wasser direkt hinter dem Wärmetauscher, um die überschüssige Energie durch Verdampfung zu verbrauchen.
Mit diesen Kühlmethoden sind verschiedene Nachteile verbunden, so kommt es bei Einsatz von Luft zu einer Verdrängung der Wasserdampfatmosphäre in der Mahlanlage und es kann hieraus eine Oxidation von Produktanhaftungen und Restprodukt resultieren. Im Extremfall können Brände und Explosionen resultieren.

Der Einsatz von Stickstoff als Kühlmittel ist sehr kostenintensiv und große Stickstoffmengen stellen ein nicht unerhebliches Sicherheitsrisiko für den Menschen dar (Erstickung durch Sauerstoffmangel bei Leckage).

Des Weiteren besitzen Gase wie Luft oder Stickstoff eine geringe Wärmekapazität, so dass die Kühlwirkung nur gering.

Die Wassereindüsung ist technisch sehr aufwendig, es müssen große Mengen Wasser versprüht werden und es muß sichergestellt werden, dass es nicht zu Wasserlachen in der Anlage kommt, welche später zu starken Produktanhaftungen führen. Um Verkrustungen an den Düsen durch im Wasser enthaltene Salze zu vermeiden, muß vollentsalztes Wasser eingesetzt werden.

Allen Kühlmethoden gemeinsam ist, dass sie unökonomisch sind, da die in der Anlage gespeicherte Energie ungenutzt ausgetragen wird, welche bei Wiederaufnahme der Produktion wieder eingetragen werden muß.

Ebenfalls ist allen Kühlmethoden gemeinsam, dass sie bei noch vorhandenem jedoch stark abgefallenem Mahlgutstrom stark in das Ergebnis der Mahltrocknung durch Änderung der Zusammensetzung des Kreisgases eingreifen und somit die Produktqualität negativ beeinflussen.

Der vorliegenden Erfindung liegt daher die Aufgabe zugrunde, ein Verfahren zur Mahltrocknung und eine Vorrichtung zur Durchführung des Verfahrens zur Verfügung zu stellen, bei dem Überhitzungen und damit Produktqualitätsminderungen vermieden werden.

Diese Aufgabe konnte dadurch gelöst werden, dass der Wärmetauscher durch einen Bypass umgangen wird und der Heißdampfstrom hinter dem Wärmetauscher wieder in den Kreislauf eingeschleust wird.

Gegenstand der Erfindung ist daher ein Verfahren zur Mahltrocknung, bei dem ein lösungsmittelfeuchtes Mahlgut mittels eines über die gesamte Mahltrocknungsanlage im Kreis geführten, über einen Wärmeaustauscher (1) erhitzten Dampfstromes in einer Mühle (2) zerkleinert und die erhaltenen Mahlgutpartikel in eine dem Mühle (2) nachgeschalteten Abscheidevorrichtung (3, 4) vom Dampfstrom abgetrennt werden, dadurch gekennzeichnet, dass der Dampfstrom über eine Bypass-Leitung (14) vollständig oder teilweise am Wärmeaustauscher (1) vorbeigeleitet werden kann. Hierzu wird vor dem Wärmetauscher jedoch hinter dem Abzweig der Bypass-Leitung eine Regelarmatur vorgesehen, welche bei Bedarf ein weiteres Durchströmen des Wärmetauschers verringert oder verhindert und den Gasstrom ganz oder teilweise durch den Bypass leitet. Ebenso kann in der Bypassleitung eine Regelarmatur vorgesehen werden, so dass im Mahltrocknungsbetrieb der Bypass ganz oder teilweise geschlossen werden kann. Die Einbindung des Bypasses hinter dem Wärmetauscher kann wahlweise zwischen Wärmetauscher und Mühle, in die Mühle oder hinter der Mühle geschehen.

Im Mahltrocknungsbetrieb wird kontinuierlich Lösungsmittel, bevorzugt Wasser, verdampft, welches bei vorhandener Wasserdampfatmosphäre als Teilstrom aus der Mahltrocknungsanlage ausgeschleust werden muß. Auch muß für ein vollständiges Abfahren (Wartung, Reparaturen) der Mahltrocknungsanlage weiterhin die Möglichkeit bestehen, den Wasserdampf z.B. durch Luft oder Stickstoff zu verdrängen. Diese Möglichkeit kann durch einen Ausblasstutzen innerhalb der Bypassleitung vorteilhaft realisiert werden. Der Ausblasstuzen muß in diesem Fall ebenfalls durch eine Regelarmatur verschließbar sein. Der Ausblasstutzen kann vor oder hinter der Regelarmatur der Bypassleitung angeordnet sein. Alternativ können auch zwei Ausblasstutzen vorgesehen werden. Die Einschleusung von Luft oder Stickstoff erfolgt vorteilhaft auf der Saugseite des Ventilators, der für die Umwälzung des Kreisgasstromes sorgt.

Als Regelarmaturen können Ventile, Klappen, Drosseln oder Schieber eingesetzt werden.

Durch das erfindungsgemäße Verfahren werden überraschend folgende Problemstellungen gelöst:
- Qualitätsminderung durch Veränderung der Zusammensetzung des Kreisgases
- Aufhebung der Inertisierung bei Kühlung mit Luft
- Abfuhr der im Wärmetauscher gespeicherten Energie an die Umgebung
- Überhitzung der Anlagenteile hinter dem Wärmetauscher und mit der Gefahr von Produktzersetzung und Sachschäden.

Der Betrieb einer solchen Mahltrocknungsanlage erfolgt derart, dass im Normalbetrieb die in den Kreislauf und somit in das Mahlgut eingetragenen Energie über die Brennerflamme geregelt wird. Sinkt der Strom des Mahlgutes stark ab, so wird die Brennerflamme bis auf eine Zündflamme zurückgenommen. Die Bypassregelarmatur (18) und die Regelarmatur der Hauptgasleitung (19) werden geregelt geöffnet bzw. geschlossen, so dass hierüber der Energieeintrag in den Kreislauf bestimmt wird. Der Wärmetauscher (1) fungiert in diesem Fall als Wärmespeicher. Wird die Regelarmatur der Haupgasleitung (19) vollständig oder nahezu vollständig geschlossen, so wird auch die Zündflamme gelöscht und gegebenenfalls die Kreisgasmenge über eine Verringerung der Drehzahl des Kreisgasventilators (5) abgesenkt. Das in der Mahltrocknungsanlage befindliche Trägergas wird nicht durch Luft verdrängt, so dass zu jeder Zeit die Inertisierung aufrecht erhalten bleibt. Zum Wiederhochfahren der Mahltrocknungsanlage wird die Bypassregelarmatur (18) geregelt geschlossen und die Regelarmatur der Hauptgasleitung (19) geregelt geöffnet. Reicht die bei voll geöffneter Regelarmatur der Haupgasleitung (19) eingetragene Energie in den Kreislauf nicht aus, so wird zusätzliche Energie über die Brennerflamme eingetragen. Die Regelung des Energieeintrages erfolgt dementsprechend in den beschriebenen Betriebsarten unterschiedlich: einmal über die Brennerflamme und einmal über den Öffnungsgrad der Bypassregelarmatur (18) und der Regelarmatur der Hauptgasleitung (19). Als Führungsgrößen zur Regelung werden die Temperaturen des Trägergasstromes zwischen Wärmetauscher und Mühle, sowie hinter der Mühle herangezogen.

Gegebenenfalls kann die Bypassregelarmatur dauerhaft geöffnet werden, wenn die Bypassleitung so dimensioniert ist, dass bei geöffneter Regelarmatur der Haupgasleitung (19) mehr als 80% des Volumenstromes durch den Wärmetauscher strömen.

Die Einbindung des Bypasses und somit die Rückschleusung des Trägergastromes hinter dem Wärmetauscher kann wahlweise zwischen Wärmetauscher und Mühle (17), in die Mühle (15) oder hinter der Mühle (16) geschehen. Bevorzugt wird die Einbindung der Bypassleitung zwischen Wärmetauscher und Mühle (Bypassleitung 17), wobei eine Einbindung möglichst nahe vor der Mühle besonders bevorzugt wird.

Die Regelarmatur der Hauptgasleitung (19) wird gegebenenfalls nicht vollständig geschlossen. Hierdurch wird eine Restkonvektion im Wärmetauscher aufrechterhalten. Die Schleichgasmenge welche weiterhin durch den Wärmetauscher gefördert wird beträgt 1 bis 15 % der Gasmenge, welche normalerweise durch den Wärmetauscher gefördert wird. Bevorzugt wird eine Schleichgasmenge von 2 bis 8 % eingestellt.

Der Verbrennungsluftventilator (6) wird auch bei gelöschter Brennerflamme und Zündflamme bevorzugt weiter laufen gelassen, um Wärmestau und lokale Überhitzungen im Bereich des Brenners und des Wäürmetauschers zu vermeiden.

Über die Ansaugregelarmatur (29) kann während des Betriebes der Mahltrocknungsanlage gezielt die Zusammensetzung des Trägergases im Kreislauf eingestellt werden. Bevorzugt wird als Trägergas ein Wasserdampf-Luft-Gemisch eingesetzt, wobei der Wasserdampf über das wasserfeuchte Mahlgut und die Luft über die Ansaugregelarmatur (29) eingetragen wird.

Gegebenenfalls kann eine solche Bypassfahrweise mit Kühlmethoden gemäß dem Stand der Technik kombiniert werden. In diesem Fall würde bevorzugt Wasser hinter dem Wärmetauscher eingedüst werden, um überschüssige Energie durch Verdampfung zu verbrauchen.

Bevorzugt werden in einer solchen Mahltrocknungsanlage wasserfeuchte Mahlgüter getrocknet. Besonders bevorzugt kommen zum Beispiel wasserfeuchte Polysaccharide und Polysaccharidderivate zum Einsatz. Am meisten bevorzugt werden wasserfeuchte Cellulosederivate aus der Gruppe Methylcellulose, Methylhydroxyethylcellulose, Methylhydroxypropylcellulose, Hydroxyethylcellulose und Carboxymethylcellulose eingesetzt. Unter den Cellulosederivaten sind bevorzugt insbesondere die Methyhydroxyethylcellulose und Methylhydroxypropylcellulose geeignet, welche mit einem Wasseranteil von 80 bis 55 Gew.-% bezogen auf das Gesamtgewicht eingesetzt werden, bevorzugt mit einem Wasseranteil von 75 bis 65 Gew.-% bezogen auf das Gesamtgewicht.

Das Mahlgut kann im Falle pastöser Konsistenz direkt über eine Fördereinrichtung (7), beispielsweise eine Doppel- oder Einfachschnecke, in den Mahlraum transportiert werden. Rieselfähige Produkte werden bevorzugt in den heißen Trägergasstrom vor der Mühle, bespielsweise über eine Zellenradschleuse (26) eingetragen.

Das Mahlgut wird durch vielfache Prall- und/oder Scherbeanspruchung zwischen rotierenden und feststehenden oder gegenläufig rotierenden Mahlwerkzeugen und/oder durch Stoß mehrerer Partikel in der Mühle (2) zerkleinert und gleichzeitig getrocknet. Die dazu erforderliche thermische Energie wird nur zum Teil durch das überhitzte Trägergas eingebracht. Die durch Reibung in Wärme umgesetzte elektrische Energie des Mühlenantriebes trägt gleichzeitig zur Trocknung bei. Als Mühlen können beispielsweise sieblose Mühlen vom Typ Ultra-Rotor (Firma Jäckering) oder Turbofiner (Firma Pallmann) oder Super-Rotor (Firma Görgens) eingesetzt werden.

Die feinteiligen Feststoffpartikel werden in einem der Mahltrocknungsvorrichtung nachgeschaltetem Abscheider vom Gasstrom getrennt. Dieses kann ein Massenkraftabscheider wie z.B. ein Zyklon oder auch ein Filterabscheider sein, gegebenenfalls wird ein Filterabscheider (4) einem Zyklon (3) nachgeschaltet.

Je nach Mühlenbauart kann bereits intern eine Klassierung durch Sichtung erfolgen. Ein gegebenenfalls vorhandener Grießeanteil wird aufgrund der die Schleppkräfte des Trägergases überwiegenden Fliehkraft vom Feingut getrennt. Das Feingut wird als Fertiggut aus der Mühle mit dem Transportgas ausgetragen. Die Grieße werden in einem internen oder externen Grießerücklauf wieder zur Mahlzone zurückgeführt (nicht gezeichnet).

Alternativ oder ergänzend kann es sinnvoll sein, eine weitere Klassierstufe durch Sichtung oder bevorzugt Siebung nachzuschalten. Der dort abgetrennte Grobanteil kann gegebenenfalls zur Mühle zurückgeführt werden oder dem Aufgabegut untergemischt werden (nicht gezeichnet).

Nach Abtrennung des mahlgetrockneten Produktes wird das Trägergas über einen Ventilator (5) in einen Kreisgaserhitzer gefördert.

Zwischen dem Ventilator (5) und dem Kreisgaserhitzer wird die Gasleitung (13) mit der Bypassregelarmatur (18) angeschlossen. Vor oder hinter dieser Regelarmatur wird eine Austrittregelarmatur angeschlossen über die ein Teilgasstrom aus dem Kreislauf ausgeschleust wird. Gegebenenfalls können auch zwei Austrittsregelarmaturen vor (20) und hinter (21) der Bypassregelarmatur (18) vorgesehen werden. Im Normalbetrieb wird hierüber genau die Menge Kreisgas ausgeschleust, welche über die Verdampfung des feuchten Mahlgutes während der Mahltrocknung entsteht. Somit dienen diese Austragsregelarmaturen zusätzlich der Druckregelung im Kreislauf der Mahltrocknungsanlage. Bevorzugt wird die Mahltrocknungsanlage im Bereich -150 mbar bis +150 mbar bezogen auf den Umgebungsdruck gefahren. Bei druckfester Auslegung aller Anlagenteile ist jedoch auch eine Fahrweise der Mahltrocknungsanlage auf einem Druckniveau größer +150 mbar bezogen auf den Umgebungsdruck möglich.

Als Kreisgaserhitzer wird bevorzugt ein Wärmetauscher (1) mit Ergasbrenner (30) eingesetzt. An Stelle eines Erdasbrenners (30) und Wärmetauschers (1) kann auch ein dampf- oder elektrisch betriebenes Heiz- oder Temperierregister eingesetzt werden. Im Kreisgaserhitzer wird das Trägergas auf die für die Trocknung des Mahlgutes benötigte Temperatur geheizt. Im Falle der oben beschriebenen wasserfeuchten Polysaccharidderivate beträgt diese je nach benötigter Trocknungsleistung 150 bis 350°C, bevorzugt 180 bis 270°C.

In Abhängigkeit der Mühle, der Mahlwerkzeuge und der Mahltrocknungsbedingungen kann eine solche Mahltrocknungsanlage sowohl für Feinstpulver (mittlere Korngröße < 70 µm) als auch für Feinpulver (mittlere Korngröße 70 - 150 µm) und Pulver (mittlere Korngröße 150 - 400 µm) sowie Granulate (mittlere Korngröße > 400 µm) genutzt werden.

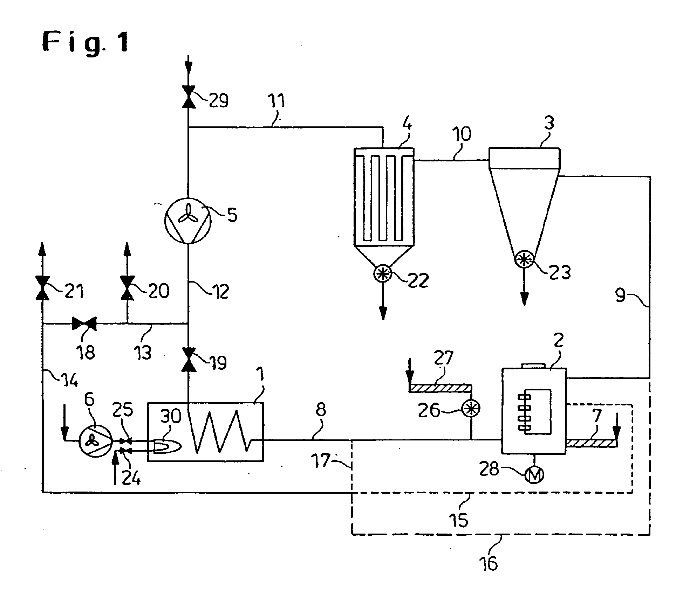

### Figur 1: Verfahrensführung

- 1.: Wärmetauscher
- 2.: Mühle
- 3.: Zyklonabscheider
- 4.: Filterabscheider
- 5.: Kreisgasventilator
- 6.: Verbrennungsluftventilator
- 7.: Produktzufuhr für pastöse Produkte
- 8.: Hauptgasleitung (Wärmetauscher - Mühle)
- 9.: Hauptgasleitung (Mühle - Zyklonabscheider)
- 10.: Hauptgasleitung (Zyklonabscheider - Filterabscheider)
- 11.: Hauptgasleitung (Filterabscheider - Kreisgasventilator)
- 12.: Hauptgasleitung (Kreisgasventilator - Wärmetauscher)
- 13.: Gasleitung (Hauptgasleitung - Bypassregelarmatur)
- 14.: Bypassleitung
- 15.: Bypassleitung (Eintrag Mühle)
- 16.: Bypassleitung (Eintrag Hauptgasleitung Mühle - Zyklonabscheider)
- 17.: Bypassleitung (Eintrag Hauptgasleitung Wärmetauscher - Mühle)
- 18.: Bypassregelarmatur
- 19.: Regelarmatur Haupgasleitung
- 20.: Austrittsregelarmatur I Kreisgasteilstrom
- 21.: Austrittsregelarmatur II Kreisgasteilstrom
- 22.: Zellenradschleuse Filterabscheider (Produktaustrag)
- 23.: Zellenradschleuse Zyklonabscheider (Produktaustrag)
- 24.: Erdgasregelarmatur
- 25.: Verbrennungsluftregelarmatur
- 26.: Zellenradschleuse Produktzufuhr für rieselfähige Produkte
- 27.: Produktzufuhr für rieselfähige Produkte
- 28.: Mühlenantrieb
- 29.: Ansaugregelarmatur Luft / Stickstoff
- 30.: Brenner

### Beispiele

### Beispiel 1:

In einer herkömmlichen Mahltrocknungsanlage mit Kreisgasfahrweise wurde Methylhydroxyethylcellulose in Form eines wasserfeuchten Mahlgutes mahlgetrocknet. Die Mahltrocknungsanlage entsprach weitestgehend der Zeichnung, jedoch exisitierte kein Bypass für den Wärmetauscher. Insbesondere fehlten die Bypassregelarmatur (18), die Bypassleitungen (14) und (15) bzw. (16) bzw. (17) sowie die Austrittsregelarmatur (21).

Das Mahlgut besass pastöse Konsistenz bei einer Feuchte von 75 Gew.% bezogen auf die Gesamtmenge. Das Mahlgut wurde über eine Doppelschnecke in die Mühle gefördert (Produktzufuhr (7)).

Die Eintrittstemperatur des Wärmeträgergases in die Mühle betrug 210-230°C und die Austrittstemperatur aus der Mühle betrug 120°C.

Bei einem plötzlichen Ausfall des Mahlgutförderstromes wurden sofort die Ansaugregelarmatur (29) und die Austrittsregelarmatur (20) voll geöffnet. Hierdurch wurde das Gasgemisch (Wasserdampf/Luft) im Kreislauf verdrängt und die Mahltrocknungsanlage mit Luft von Umgebungstemperatur gekühlt. Zusätzlich wurde die Brennerflamme gelöscht. Dennoch stieg die Temperatur hinter der Mühle auf bis zu 170°C und bis zu 150°C hinter dem Filter.

### Beispiel 2:

In einer Mahltrocknungsanlage mit Kreisgasfahrweise wurde Methylhydroxyethylcellulose in Form eines wasserfeuchten Mahlgutes mahlgetrocknet. Die Mahltrocknungsanlage entsprach weitestgehend der Zeichnung, wobei der Bypass zwischen Wärmetauscher und Mühle in die Hauptgasleitung eingebunden war (Bypassleitung (17)).

Das Mahlgut besaß pastöse Konsistenz bei einer Feuchte von 75 Gew.% bezogen auf die Gesamtmenge. Das Mahlgut wurde über eine Doppelschnecke in die Mühle gefördert (Produktzufuhr (7)).

Bei gleichem Gasdurchsatz und gleicher Zusammensetzung des Wärmeträgergases wie in Beispiel 1 wurde die 1,3fache Menge des pastösen Mahlgutes mahlgetrocknet. Die Eintrittstemperatur in die Mühle betrug 240-260°C und die Austrittstemperatur aus der Mühle betrug 120°C.

Bei einem plötzlichen Ausfall des Mahlgutförderstromes wurden sofort die Bypassregelarmatur (18) geöffnet und die Regelarmatur der Hauptgasleitung (19) geschlossen. Hierdurch wurde das Wärmeträgergas (Wasserdampf/Luft-Gemisch) nicht mehr durch den Wärmetauscher, sondern durch den Bypass geleitet. Zusätzlich wurde die Brennerflamme gelöscht. Die Temperatur hinter der Mühle stieg bis zu 150°C und die Temperatur hinter dem Filter bis zu 130°C.

Bei deutlich erhöhtem Mahlgutstrom konnte also ein sicherere Fahrweise als in Beispiel 1 erreicht werden, da die Temperatur in der Mühle, im Zyklonabscheider und im Filterabscheider deutlich niedriger lag und die Inertisierung (Wasserdampf/Luft-Gemisch) nicht aufgehoben wurde.

## Patentansprüche

1. Verfahren zur Mahltrocknung , bei dem ein lösungsmittelfeuchtes Mahlgut mittels eines über die gesamte Mahltrocknungsanlage im Kreis geführten, über einen Wärmetauscher (1) erhitzten Dampfstromes in einer Mühle (2) zerkleinert und die erhaltenen Mahlgutpartikel in eine der Mühle (2) nachgeschalteten Abscheidevorrichtung (3, 4) von Dampfstrom abgetrennt werden, **dadurch gekennzeichnet, dass** der Dampfstrom über eine Bypass-Leitung (14) vollständig oder teilweise am Wärmetauscher (1) vorbeigeleitet werden kann, und die Bypass-Leitung (14) in Abhängigkeit von der Temperatur über eine Bypass-Regelarmatur (18) geöffnet oder geschlossen werden kann.

2. Verfahren nach Anspruch 1, **dadurch gekennzeichnet, dass** das Mahlgut Polysaccharide oder Polysaccharidderivate sind.

3. Verfahren nach Anspruch 1, **dadurch gekennzeichnet, dass** das Mahlgut Cellulosederivate aus der Gruppe Methylcellulose, Methylhydroxyethylcellulose, Methylhydroxypropylcellulose, Hydroxyethylcellulose und Carboxymethylcellulose sind.

4. Verfahren nach einem der Ansprüche 1 bis 3, **dadurch gekennzeichnet, dass** das Lösungsmittel Wasser und der Dampfstrom ein Wasserdampf / Luft- oder Wasserdampf / Inertgas-Gemisch ist.

5. Verfahren nach einem der Ansprüche 1 bis 4, **dadurch gekennzeichnet, dass** das Verfahren eine Feinstmahltrocknung für Partikelgrößen kleiner 70 µm ist.

6. Vorrichtung zur Mahltrocknung, bei dem ein lösungsmittelfeuchtes Mahlgut mittels eines über die gesamte Mahltrocknungsanlage im Kreis geführten über einen Wärmeaustauscher (1) erhitzten Dampfstromes in einer Mühle (2) zerkleinert und die erhaltenen Mahlgutpartikel in eine der Mühle (2) nachgeschalteten Abscheidevorrichtung (3, 4) vom Dampfstrom abgetrennt werden, **dadurch gekennzeichnet, dass** eine Bypass-Leitung (14) vorgesehen ist, über die der Dampfstrom vollständig oder teilweise am Wärmeaustauscher (1) vorbeileitbar ist wobei die Bypass-Leitung (14) in Abhängigkeit von der Temperatur über eine Bypass-Regelarmatur (18) geöffnet oder geschlossen werden kann.

## Claims

1. A process of mill drying wherein a solvent-moist material to be ground is ground in a mill (2) by means of a vapor stream which is circulated throughout the whole mill-dryer apparatus and which has been heated by means of a heat-exchanger (1) and the obtained milled particulate material is separated from the vapor stream in a separating apparatus (3,4) arranged downstream to the mill (2), **characterized in that** the vapor stream can be directed through a bypass line (14) completely or partially past the heat-exchanger (1) and the bypass line (14) can be opened or closed by a bypass control valve (18) dependent on the temperature.

2. The process of Claim 1 **characterized in that** the material to be ground are polysaccharides and polysaccharide derivatives.

3. The process of Claim 1 **characterized in that** the material to be ground is a selected from the group of methylcellulose, methylhydroxyethylcellulose, methylhydroxypropylcellulose, hydroxyethylcellulose and carboxymethylcellulose.

4. The process of any of Claims 1 to 3 **characterized in that** the solvent is water and the vapor stream is a steam/air mixture or a steam/inert gas mixture.

5. The process of any of Claims 1 to 4 **characterized in that** the process is a mill drying to obtain finest particles having particle sizes of less than 70 µm.

6. An apparatus for mill drying wherein a solvent-moist material to be ground is ground in a mill (2) by means of a vapor stream which is circulated throughout the whole mill-dryer apparatus and which has been heated by means of a heat-exchanger (1) and the obtained milled particulate material is separated from the vapor stream in a separating apparatus (3,4) arranged downstream to the mill (2), **characterized in that** a bypass line (14) is provided through which the vapor stream can be directed completely or partially past the heat-exchanger (1) wherein the bypass line (14) can be opened or closed by a bypass control valve (18) dependent on the temperature.

## Revendications

1. Procédé de séchage-broyage, dans lequel on broie dans un broyeur (2) une matière à broyer humidifiée par un solvant, au moyen d'un courant de vapeur chauffé au moyen d'un échangeur de chaleur (1) et conduit en circuit par toute l'installation de séchage-broyage, et on sépare les particules de matière à broyer obtenues du courant de vapeur dans un dispositif de séparation (3, 4) installé en aval du broyeur (2), **caractérisé en ce que** le courant de vapeur peut contourner totalement ou partiellement l'échangeur de chaleur (1) au moyen d'une conduite de dérivation (14) et la conduite de dérivation (14) peut être ouverte ou fermée en fonction de la température au moyen d'une vanne de régulation de dérivation (18).

2. Procédé selon la revendication 1**, caractérisé en ce que** la matière à broyer est constituée par des polysaccharides ou des dérivés de polysaccharides.

3. Procédé selon la revendication 1, **caractérisé en ce que** la matière à broyer est constituée par des dérivés de la cellulose, du groupe méthylcellulose, méthylhydroxyéthylcellulose, méthylhydroxypropylcellulose, hydroxyéthylcellulose et carboxyméthylcellulose.

4. Procédé selon l'une quelconque des revendications 1 à 3, **caractérisé en ce que** le solvant est l'eau et le courant de vapeur est un mélange de vapeur d'eau/air ou de vapeur d'eau/gaz inerte.

5. Procédé selon l'une quelconque des revendications 1 à 4, **caractérisé en ce que** le procédé est un séchage-broyage très fin pour des tailles de particules inférieures à 70 µm.

6. Dispositif de séchage-broyage, dans lequel on broie dans un broyeur (2) une matière à broyer humidifiée par un solvant, au moyen d'un courant de vapeur chauffé au moyen d'un échangeur de chaleur (1) et conduit en circuit par toute l'installation de séchage-broyage, et on sépare les particules de matière à broyer obtenues du courant de vapeur dans un dispositif de séparation (3, 4) installé en aval du broyeur (2), **caractérisé en ce qu'**il est prévu une conduite de dérivation (14), par laquelle le courant de vapeur peut contourner totalement ou partiellement l'échangeur de chaleur (1), dans lequel la conduite de dérivation (14) peut être ouverte ou fermée en fonction de la température au moyen d'une vanne de régulation de dérivation (18).
